# EUROPÄISCHE PATENTSCHRIFT

(11) **EP 0 841 491 B1**
(45) Veröffentlichungstag und Bekanntmachung des Hinweises auf die Patenterteilung: **15.09.1999**
(21) Anmeldenummer: 97119635.7
(22) Anmeldetag: 10.11.1997
(51) Int. Cl.: F16B 19/10, B21J 15/04

(54) **In ein Sackloch einsetzbares Befestigungselement sowie Verfahren zum Setzen eines Befestigungselementes**
Fastening element for a blind hole and method for setting fastening elements
Elément de fixation pour un trou borgne et procédé pour la mise en place d'un élément de fixation

(30) Priorität: 12.11.1996 DE 19646668
(43) Veröffentlichungstag der Anmeldung: 13.05.1998
(73) Patentinhaber: SFS Industrie Holding AG, 9435 Heerbrugg (CH)
(72) Erfinder: Palm, Erich, 9434 Au (SG) (CH)
(74) Vertreter: Ludescher, Hans

(56) Entgegenhaltungen:
- EP-A- 0 655 560
- DE-A- 3 336 157
- DE-A- 19 540 904
- DE-A- 19 543 651
- DE-C- 815 281
- DE-C- 3 420 360
- US-A- 4 040 328

## Beschreibung

Die Erfindung betrifft ein in ein Sackloch eingesetztes Befestigungselement zur Fixierung von Bauteilen an Baukörpern, vorzugsweise zur Fixierung von Profilteilen an mit vorgefertigten oder vorgebohrten Sacklöchern versehenen Verkleidungsplatten, bestehend aus einer einen Anschlagflansch und einen zumindest auf einem Teil seiner Länge an der Außenwandung mit Erhebungen und Vertiefungen ausgeführten Schaftteil aufweisende, umfangsgeschlossen rohrförmige Hülse mit einer mittigen Durchgangsbohrung und einen mit einem Kopf versehenen Aufweitdorn mit einem Zugstift, wobei die Erhebungen und Vertiefungen am Schaftteil der Hülse als Gewinde ausgeführt sind, dessen Außendurchmesser gleich oder kleiner ist als der Durchmesser des Sackloches, in welches die Hülse eingesetzt ist.

Gerade bei der Befestigung von besonderen Bauteilen an speziellen Baukörpern, wie dies beispielsweise bei Fassadenplatten der Fall ist, kommt es sehr wesentlich auf eine einfache Montagemöglichkeit, aber auch auf eine sichere Halterung an. In der Regel können Platten ab 8 mm Dicke so befestigt werden, daß die Befestigungsstelle nicht mehr sichtbar ist. Zu diesem Zweck werden an der Rückseite der Verkleidungsplatten Profilteile mit Hilfe von dübelartigen Befestigungselementen angeordnet. Anschließend werden die Platten an einer Metallunterkonstruktion, welche beispielsweise an einer Gebäudewand befestigt ist, eingehängt.

Die bisherigen Befestigungselemente, welche eine Befestigung in einem Sackloch gewährleisten sollten, wurden als gewindeschneidende Schrauben oder aber als Hinterschnittdübel ausgeführt. Gerade bei dünnen Platten von beispielsweise 8 mm Dicke ergeben sich jedoch Probleme bei der Herstellung des Gewindes und somit bei der sicheren Halterung einer solchen Schraube, da nur eine sehr geringe Zahl von Gewindegängen zur Verfügung steht.

Besonders nachteilig erweist sich die Befestigung mit einer Art Hinterschnittdübel, und zwar gleichgültig, ob es sich um durch den Einsatz einer Schraube auseinander schwenkbare Dübelteile oder um nach außen schwenkbare Teile eines Blindniets handelt. Zudem ist die Herstellung einer hinterschnittenen Bohrung an sich allein schon aufgrund die notwendigen Spezialwerkzeuge teuer und aufwendig.

Eine besondere Art von hinterschnittenen Abschnitten in Form von Rillen, Nuten usw. ist ebenfalls bereits bekannt geworden (DE-A-33 36 157). Auch bei dieser Ausführung muß die Bohrung mit einer ganz speziell gestalteten Wandung vorbereitet werden, wobei das Material des Schaftteiles der Hülse diesfalls in die hinterschnittenen Abschnitte in Form von Rillen, Nuten oder dergleichen hineingedrückt wird. Somit erfolgt lediglich ein Andrücken der Oberfläche des Schaftteiles der einzusetzenden Hülse des Befestigungselementes an die besonders geformte Wandung des Sackloches.

Bei den aus der DE-815 281 und der DE-C-34 20 360 bekannt gewordenen Ausführungen sind die Erhebungen und Vertiefungen am Schaftteil der Hülse als Gewinde ausgeführt, und dieses Gewinde ist vom freien Ende des Schaftteiles der Hülse ausgehend über den Schaftteil geführt. Der Außendurchmesser des Gewindes ist gleich oder kleiner als der Durchmesser des Sackloches, in welches die Hülse einzusetzen ist.

Nach dem Einsetzen eines solchen Befestigungselementes wird allein durch das Herausziehen eines Aufweitdornes der Durchmesser einer in das Sackloch eingeführten Hülse zumindest auf einem Teilabschnitt oder auf der ganzen Länge entsprechend erweitert, so daß die Außenwandung des Schaftteiles der Hülse in die glatte Wandung des Sackloches eindringt. Durch die vorgesehenen Erhebungen in Form eines Gewindes werden ein sicheres Eindringen in die Bohrungswandung und ein fester Sitz des Schaftteiles der Hülse in der Sacklochbohrung gewährleistet. Da der Schaftteil umfangsgeschlossen rohrförmig ausgebildet ist, verbleibt der Schaftteil in der umgeformten Stellung, also im Bereich des größeren Außen- und natürlich auch Innendurchmessers. Es wird also nicht nur ein federndes und sich somit gegebenenfalls wieder änderndes Anpressen der Außenwandung des Befestigungselementes an der Wandung des Sackloches bewirkt, sondern es ist eine endgültige und fixierte Aufweitung gegeben, welche eine sichere und unlösbare Halterung gewährleistet, da dieses Gewinde unter Materialverformung in die Wandung des Sackloches eindringt.

Es kommt bei diesen bekannten Ausführungen also zu einem Umformen des Schaftteiles der Hülse auf einen größeren Innen- und Außendurchmesser, so daß die am Außenumfang vorgesehenen Erhebungen in Form eines Gewindes eine feste Halterung des Befestigungselementes im Sackloch bewirken. Da der Schaftteil der Hülse umfangsgeschlossen rohrförmig ausgebildet ist, d.h. nicht mit entsprechenden Schlitzen versehen ist, kann es nicht zu einem Rückfedern der nach außen gedrängten Bereiche kommen.

Durch die Ausgestaltung des Befestigungselementes gemäß der DE-C-34 20 360 ist es auch möglich, eine Demontage desselben durchzuführen, da bei entsprechendem Drehmoment auf die Hülse die großen Sicherungskräfte überwunden werden können, so daß die Hülse dann nach Art einer Schraube wieder aus dem Sackloch herausgedreht werden kann. Dies bringt insbesondere bei einer notwendigen Entsorgung nach einer Demontage von solchen Bauteilen und Baukörpern einen Vorteil mit sich.

Die vorliegende Erfindung hat sich daher zur Aufgabe gestellt, ein Befestigungselement der eingangs genannten Art zu schaffen, welches ebenfalls in ein Sackloch ohne hinterschnittene Abschnitte eingesetzt werden kann und ein verbessertes Eindringen und einen festen Sitz gewährleistet.

Erfindungsgemäß gelingt dies dadurch, daß der mit einem Gewinde versehene Teilabschnitt des Schaftteiles von dessen freiem Ende ausgehend nur über einen kurzen Bereich geführt ist, welcher kleiner ist als die Tiefe des Sackloches, in welches die Hülse eingestzt ist.

Durch diese Maßnahme ist eine noch verbesserte Sicherung der Hülse möglich, da das in die Wandung des Sackloches eingedrückte Gewinde nur über jene Länge vorhanden ist, welche auch auf dem Schaftteil der Hülse vorgesehen ist. In einem solchen Fall ist eine absolute Drehsicherung gegeben, da die Hülse keinesfalls selbsttätig eine Bewegung ausüben kann. Obwohl gegen das äußere Ende des Sackloches hin kein Gewinde in der Wandung eingeformt ist, kann die Hülse des erfindungsgemäßen Befestigungselementes bei entsprechender Kraftausübung notfalls trotzdem herausgedreht werden, weil sich die Hülse dann nämlich durch den Rückwärtsdrehvorgang ein eigenes Gewinde schneidet.

Außerdem ist als wesentlicher Vorteil dieser Maßnahme anzumerken, daß sich die Kräfte, die sich durch die radiale Aufweitung und die radiale Einformung des Bereiches B mit dem Gewinde 8 ergeben, praktisch nur im Mittelbereich bezogen auf die beiden außen liegenden Oberflächen des Baukörpers bzw. der entsprechenden Verkleidungsplatte auswirken. Dadurch können Rißbildungen bzw. kann ein Ausbrechen von Abschnitten der Verkleidungsplatte vermieden werden, und an der Oberfläche der Verkleidungsplatten sind keine übermäßigen Spannungen infolge der radialen Einformung der Hülse vorhanden.

Bei einer bevorzugten Ausführungsform ist vorgesehen, daß der Schaftteil der Hülse an seiner Außenwandung als Erhebungen einen gegebenenfalls trilobular ausgeführten Gewindeabschnitt aufweist. Diesfalls wird einfach der Gewindebereich in die Wandung des Sackloches eingepreßt, womit eine ausreichende Ausreißfestigkeit erzielt wird. Wenn ein trilobular oder ein in anderer Weise unrund ausgeführter Gewindeabschnitt vorgesehen ist, besteht zudem die Gewähr, daß sich die Hülse nicht verdrehen kann. Somit ist eine zusätzliche Verdrehsicherheit geschaffen worden. Trotzdem ist aber die Möglichkeit der Demontage eines solchen Befestigungselementes gewährleistet, da das Befestigungselement beim entsprechenden Verdrehen der Hülse durch den Gewindeabschnitt aus dem Sackloch entfernt werden kann.

In diesem Zusammenhang kann auch vorgesehen werden, daß auf dem Schaftteil zwei Bereiche mit einem Gewinde ausgebildet sind, wobei diese Gewinde den beiden Enden des Schaftteiles zugeordnet sind. Da die Hülse gerade beim Einsatz in relativ dünnen Platten sehr kurz ausgebildet ist, ist es aus herstellungstechnischen Gründen sehr schwierig, nur über einen kurzen Endbereich einen Gewindeabschnitt vorzusehen. Weil aber aus Funktionsgründen zweckmäßigerweise nur ein kurzer Gewindeabschnitt und daran anschließend ein gewindeloser Abschnitt der Hülse vorhanden sein sollen, ist in einfacher Weise vorgesehen worden, zwei mit Abstand voneinander angeordnete Gewindeabschnitte auszubilden, wobei der zweite Gewindeabschnitt bereits außerhalb des entsprechenden Baukörpers, also z.B. einer Platte, zu liegen kommt und daher keine Haltefunktion mehr ausüben muß.

Für spezielle Einsatzfälle, vor allem für besondere Ausbildungen und Materialien von Bauteilen oder Baukörpern kann vorgesehen werden, daß das Gewinde ein Sägezahnprofil aufweist.

Es ist in diesem Zusammenhang auch denkbar, daß ein rechts- oder linksgängiges Gewinde ausgebildet ist. Damit kann von vorneherein festgelegt werden, in welche Drehrichtung ein eventuell notwendiges Lösen des Befestigungselementes durchgeführt werden will.

Eine weitere Ausführungsvariante ergibt sich dann, wenn ein mehrgängiges Gewinde vorgesehen ist. Trotz besonders guten Eingriffes bei einem mehrgängigen Gewinde kann eine eventuell notwendige Demontage mit relativ wenigen Umdrehungen durchgeführt werden.

Weitere erfindungsgemäße Merkmale und besondere Vorteile werden in der nachstehenden Beschreibung anhand der Zeichnungen noch näher erläutert. Es zeigen:
Fig. 1 ein Ausführungsbeispiel einer Befestigung eines Profilteiles an einer Verkleidungsplatte;
Fig. 2 einen Schnitt durch ein bestimmungsgemäß eingesetztes Befestigungselement in ungesetztem Zustand;
Fig. 3 die gleiche Darstellung wie in Fig. 2, wobei das Befestigungselement jedoch fertig gesetzt ist.

Obwohl das erfindungsgemäße Befestigungselement für jede Art von Befestigung in einem Sackloch eingesetzt werden kann, also zur Fixierung von verschiedenen Bauteilen an irgendwelchen Baukörpern, wird nachstehend auf eine besondere Befestigungsmöglichkeit näher eingegangen. Es sollen Profilteile 2 an Verkleidungsplatten 3 befestigt werden, welche mit vorgefertigten oder vorgebohrten Sacklöchern 13 versehen sind. Zu diesem Zweck wird das erfindungsgemäße Befestigungselement 1, welches aus einer Hülse 4 und einem Aufweitdorn 15 besteht, eingesetzt. Die Hülse 4 weist einen Anschlagflansch 6 und einen Schaftteil 7 auf, wobei der Schaftteil 7 mit Erhebungen bzw. Vertiefungen in Form eines Gewindeabschnittes 8 versehen ist.

Der Aufweitdorn 15 ist aus einem Kopf 10 und einem Zugstift 5 gebildet. Der Kopf 10 des Aufweitdornes 15 stützt sich dabei am freien Ende des Schaftteiles 7 ab, und der Zugstift 5 liegt in der Durchgangsbohrung der Hülse. Zwischen dem Kopf 10 und dem Zugstift 5 des Aufweitdornes 15 ist ein kegelstumpfförmiger Abschnitt 14 vorgesehen. Vorteilhaft ist dabei die Durchgangsbohrung 9 der Hülse 4 am freien Ende des Schaftteiles 7 zumindest in der unverformten Ausgangsausführung trichterartig erweitert ausgestaltet. Der Aufweitdorn 15 weist an den kegelstumpfförmigen Abschnitt 14 anschließend im Bereich des Zugstiftes 5 eine Sollbruchstelle, z.B. eine Sollbruchkerbe, auf.

Zur Befestigung des Profilteiles 2 an der Verkleidungsplatte 3 muß in der Verkleidungsplatte 3 lediglich ein zylindrisches Sackloch 13 mit im Wesentlichen glatter Bohrungswandung hergestellt werden. Nun wird das Befestigungselement, welches aus Hülse 4 und Aufweitdorn 15 besteht, durch eine entsprechende Bohrung im Profilteil 2 in das Sackloch 13 der Verkleidungsplatte 3 eingeführt. Durch Herausziehen des Zugstiftes 5 und gleichzeitiges Festhalten der Hülse 4 wird der Kopf 10 in die Durchgangsbohrung 9 des Schaftteiles 7 hineingezogen und bewirkt dadurch ein Aufweiten des Schaftteiles sowohl im Innen- als auch im Außendurchmesser. Damit werden die Gewindegänge des Gewindeabschnittes 8, welcher die Erhebungen bildet, in die glatte Wandung des Sackloches hineingedrückt. Die Verformung des Schaftteiles 7 der Hülse 4 ist dabei eine plastische Verformung, d.h. der Schaftteil 7 der Hülse 4 verbleibt in dieser verformten Stellung, ein elastisches Zurückführen in die Ausgangsstellung ist nicht möglich. Dies ist auch deshalb gewährleistet, weil der Schaftteil 7 der Hülse 4 umfangsgeschlossen rohrförmig ausgebildet und nicht mit irgendwelchen Schlitzen versehen ist. Somit kann eine optimale Befestigung in einem Sackloch bewirkt werden, ohne daß es einer aufwendigen und teuren Herstellung von hinterschnittenen Bohrlöchern bedarf. Ein optimaler Festsitz ist auch deshalb gegeben, weil nicht nur ein glattes Andrücken der Außenwandung des Schaftteiles an die Bohrungswand erfolgt, sondern ein radiales Eindringen unter Verformung der glatten Bohrungswandung.

Wie schon ausgeführt, ist eine einfache Ausgestaltung dann gegeben, wenn als Erhebungen ein Gewindeabschnitt 8 vorhanden ist. Ein solcher Gewindeabschnitt kann auf verschiedene Art und Weise gestaltet werden, d.h. als übliches metrisches Gewinde oder als Gewinde mit veränderten Steigungen oder veränderten Gewindeformen. Es ist auch denkbar, einen unrunden, z.B. trilobularen Gewindeabschnitt auszubilden, womit gleichzeitig eine Verdrehsicherung der Hülse im Sackloch bewirkt wird. Durch die weiter vorstehenden Bereiche des Gewindeabschnittes werden diese auch tiefer in die Bohrungswandung des Sackloches eingepreßt, so daß ein selbsttätiges Lösen eines solchen Befestigungselementes nicht möglich ist. Das Gewinde kann auch als Sägezahnprofil, rechtsoder linksgängig oder gegebenenfalls mehrgängig ausgeführt sein.

Ferner ist es denkbar, daß der Anschlagflansch 6 der Hülse 4 zum Ansetzen eines Werkzeuges ausgestaltet ist, um bei Vorsehen eines Gewindeabschnittes ein nachträgliches Lösen des Befestigungselementes zu ermöglichen. Ein solches Lösen wäre bei entsprechendem Kraftaufwand auch bei unrunder, z.B. trilobularer Ausbildung des Gewindeabschnittes denkbar.

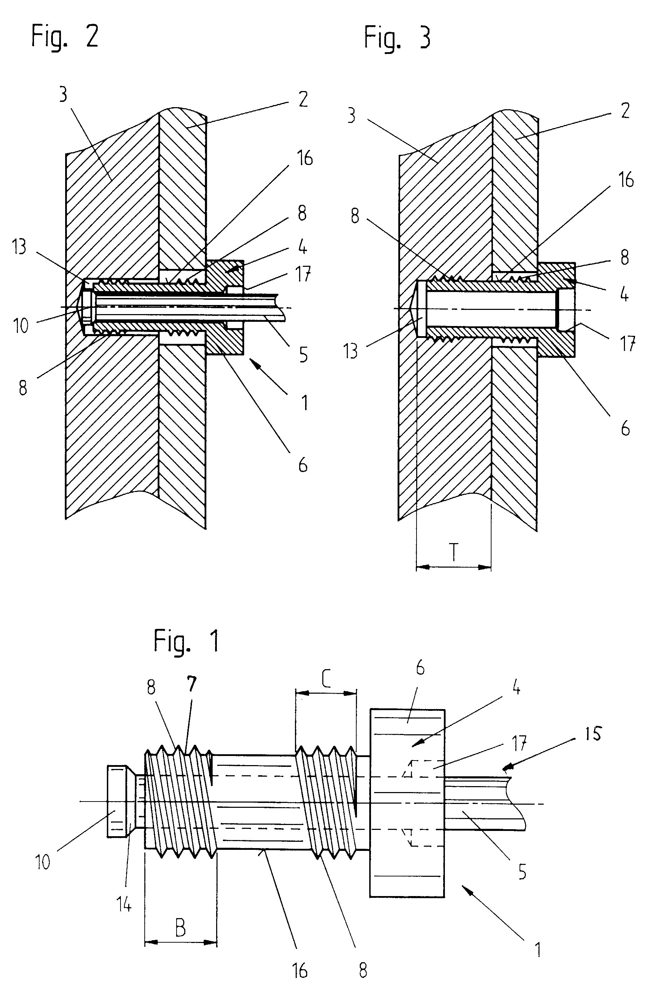

Bei der in der Zeichnung gezeigten Ausgestaltung ist der mit einem Gewinde 8 versehene Teilabschnitt des Schaftteiles 7 von dessen freiem Ende ausgehend nur über einen kurzen Bereich geführt. Dieser kurze Bereich B ist kleiner als die Tiefe T des Sackloches 13, in welches die Hülse 4 einzusetzen ist. An diesen Bereich B schließt sich ein glatter Abschnitt 16 des Schaftteiles 7 an, welcher also ohne ein Gewinde ausgeführt ist. Die besondere Ausgestaltung nach den Fig. 1 und 2 sieht weiter vor, zwei Teilabschnitte des Schaftteiles 7 mit einem Gewinde 8 auszubilden, so daß also die Bereiche B und C, welche mit entsprechendem Abstand voneinander angeordnet sind, ein Gewinde 8 aufweisen. Der dann zwischen diesen beiden Bereichen B und C liegende Abschnitt 16 des Schaftteiles 7 ist im Wesentlichen mit glatter Oberfläche versehen. Wie insbesondere den Fig. 2 und 3 entnommen werden kann, hat das Gewinde 8 im Bereich C praktisch keinerlei Einfluß auf die besondere Befestigung mit dem Befestigungselement 1. Aus Herstellungsgründen ist es jedoch wesentlich einfacher, wenn auf den relativ kurzen Schaftteil 7 zwei kurze Gewinde mit Abstand voneinander hergestellt werden können.

Beim Einformen des Schaftteiles 7 in die Wandung der Bohrung 13 wird also unter plastischer Verformung nur der Bereich B mit dem Gewinde 8 eingedrückt. Der daran anschließende Abschnitt 16 des Schaftteiles 7 liegt bündig an der Wandung der Bohrung 13 an. Wie insbesondere der Fig. 3 entnommen werden kann, wird dadurch kein durchgängiges Gewinde in dem Sackloch hergestellt, sondern lediglich ein dem Bereich B angepaßter Gewindebereich, so daß eine besondere Ausdrehsicherheit gewährleistet ist. Ein selbsttätiges Lösen eines solchen Befestigungselementes ist deshalb ausgeschlossen.

Bei der in den Fig. 1 bis 3 dargestellten Ausführung ist im Bereich des Anschlagflansches 6 ein Innenangriff 17 zum Ansetzen eines Werkzeuges, z.B. einen Innensechskantes, vorgesehen.

Im Rahmen der Erfindung wäre es zudem denkbar, keine Sollbruchstelle, d.h. keine Sollbruchkerbe, vorzusehen, so daß die Möglichkeit gegeben wäre, den Aufweitdorn 15 praktisch zur Gänze aus der Hülse 4 herauszuziehen, wobei die aufgeweitete Hülse trotzdem in ihrer aufgeweiteten Stellung verbleibt. Eine solche Variante wäre insbesondere dann vorteilhaft, wenn auf einen entsprechend langen Aufweitdorn mit am freien Ende ausgebildetem Kopf eine Vielzahl von Hülsen aufgereiht ist, welche nacheinander in entsprechenden Sacklöchern montiert werden. Der Aufweitdorn bzw. der Zugstift 5 dieses Aufweitdornes 15 könnte dann praktisch als Magazinierhilfe herangezogen werden und außerdem den Setzvorgang für die nacheinander zu montierenden Befestigungselemente bewirken.

Bei einer besonderen Ausführungsform des Befestigungselementes haben sich besondere Verhältnisse in den Abmessungen als vorteilhaft erwiesen, wobei diese Verhältnisse im unverformten Zustand der Hülse angegeben werden. Wenn der Schaftteil 7 der Hülse 4 als Art der Erhebung mit einem Gewinde 8 versehen ist, dann ist es vorteilhaft, wenn das Verhältnis Gewindeaußendurchmesser zum Durchmesser des Kopfes 10 des Aufweitdornes 15 annähernd 1,3:1 beträgt. In gleicher Weise liegt das Verhältnis zwischen dem Durchmesser des Zugstiftes 5 und dem Durchmesser des Kopfes 10 annähernd bei 1:1,3. Mit einer solchen Bemessung ist ein sehr gutes Einformen des Gewindeabschnittes in die im Wesentlichen glatte Bohrungswandung des Sackloches gewährleistet. Außerdem ergeben sich beim Verformen keine allzu hohen Zugkräfte, und Rißbildungen in der Hülse sind dadurch verhindert. Selbstverständlich sind im Rahmen der Erfindung auch andere Maßverhältnisse denkbar, wobei insbesondere je nach Einsatzbereich des Befestigungselementes, d.h. je nach Material der mit den Sacklöchern versehenen Verkleidungsplatten oder sonstigen Baukörpern und je nach verwendetem Material für die Hülse 4 möglicherweise andere Bedingungen vorteilhafter sind.

Trotz der notwendigen Umformung zumindest eines Teiles der Hülse kann eine entsprechend große Wandstärke bei der Hülse vorgesehen werden, was auch zu einer großen Festigkeit führt. Es kann daher auch in optimaler Weise rostfreies Material eingesetzt werden.

Es wurde bereits ausgeführt, daß durch den kegelstumpfförmigen Abschnitt 14 und die entsprechend trichterartige Erweiterung der Durchgangsbohrung in der Hülse 4 die Verformungsarbeit leichter und mit geringerer Zugkraft erfolgen kann. Diese besondere Ausgestaltung hat aber noch einen anderen technischen Effekt, und zwar kann erreicht werden, daß der Kopf 10 des Aufweitdornes 15 in der unverformten Ruhestellung des Befestigungselementes nur um ein geringes Maß oder gegebenenfalls überhaupt nicht über das freie Ende des Schaftteiles 7 der Hülse 4 vorsteht. Dadurch kann das Befestigungselement praktisch bis zum Anschlag in das Sackloch hineingeschoben werden, was gerade bei relativ dünnen Verkleidungsplatten 3 von besonderem Vorteil ist. Wenn zusätzlich noch die Erhebungen in Form eines Gewindes 8 bis unmittelbar zum freien Ende des Schaftteiles 7 geführt sind, dann ist gewährleistet, daß bereits im tiefsten Bereich des Sackloches ein optimaler formschlüssiger Eingriff an der Bohrungswandung des Sackloches vorhanden ist.

Durch besondere Ausgestaltung des Gewindes 8 kann der Spreizdruck auf einem reduzierten Maß gehalten werden, so daß die Befestigungselemente auch bei empflindlichem, z.B. sprödem Material eingesetzt werden können. Durch die gute und sichere Spreizwirkung bzw. den radial nach außen gerichteten Druck kann ein erfindungsgemäßes Befestigungselement bei Baukörpern jeglicher Art von Material eingesetzt werden. Der Baukörper kann also genausogut eine Metallplatte oder ein -profil sein.

Als Erhebungen können Gewindeabschnitte oder schraubenlinienförmig verlaufende Rippen vorgesehen werden, aber auch die Kombination von scharfkantigen Gewindeabschnitten und Rippen ist denkbar, so daß immer eine optimale Sicherheit gegen ein selbsttätiges Lösen gewährleistet ist. Sollte einmal ein Entfernen erforderlich sein, dann hilft eine konstruktive Gestaltung durch die fortlaufend vorgesehene Gewindeform. Beim Verdrehen der Hülse wird diese dann also entsprechend der Gewindesteigung herausgedreht, wobei der Eingriff der etwas breiteren Rippen entweder durch Beschädigung der Oberfläche im Sackloch oder aber durch Beschädigung der Rippen selbst aufgehoben wird.

Ein erfindungsgemäßes Befestigungselement eignet sich nicht nur für den Einsatz in Sacklöchern. Es könnten durchaus auch Durchgangslöcher sein, wobei es gleichgültig ist, ob es nun in Axialrichtung gesehen lange oder kurze Bohrungen sind. Es ist so eine schnelle und wirksame Befestigung von irgendwelchen Bauteilen an irgendwelchen Baukörpern in einer Art Schnellmontage möglich, ohne daß eine Bohrung vorab mit einem Gewinde oder sonstigen radialen Vertiefungen versehen werden müßte, und ohne daß Muttern oder dergleichen eingesetzt werden müßten.

## Patentansprüche

1. In ein Sackloch (13) eingesetztes Befestigungselement (1) zur Fixierung von Bauteilen an Baukörpern, vorzugsweise zur Fixierung von Profilteilen (2) an mit vorgefertigten oder vorgebohrten Sacklöchern (13) versehenen Verkleidungsplatten (3), bestehend aus einer einen Anschlagflansch (6) und einen zumindest auf einem Teil seiner Länge an der Außenwandung mit Erhebungen und Vertiefungen ausgeführten Schaftteil (7) aufweisende, umfangsgeschlossen rohrförmige Hülse (4) mit einer mittigen Durchgangsbohrung und einen mit einem Kopf (10) versehenen Aufweitdorn (15) mit einem Zugstift (5), wobei die Erhebungen und Vertiefungen am Schaftteil (7) der Hülse (4) als Gewinde (8) ausgeführt sind, dessen Außendurchmesser gleich oder kleiner ist als der Durchmesser des Sackloches (13), in welches die Hülse (4) eingesetzt ist, **dadurch gekennzeichnet**, daß der mit einem Gewinde (8) versehene Teilabschnitt des Schaftteiles (7) von dessen freiem Ende ausgehend nur über einen kurzen Bereich (B) geführt ist, welcher kleiner ist als die Tiefe (T) des Sackloches (13), in welches die Hülse (4) eingesetzt ist.

2. Befestigungselement nach Anspruch 1, dadurch gekennzeichnet, daß der Schaftteil (7) der Hülse (4) an seiner Außenwandung als Erhebungen (8) einen gegebenenfalls trilobular ausgeführten Gewindeabschnitt aufweist.

3. Befestigungselement nach den Ansprüchen 1 und 2, dadurch gekennzeichnet, daß auf dem Schaftteil (7) zwei Bereiche (B, C) mit einem Gewinde (8) ausgebildet sind, wobei diese Gewinde (8) den beiden Enden des Schaftteiles (7) zugeordnet sind.

4. Befestigungselement nach einem der Ansprüche 1 bis 3, dadurch gekennzeichnet, daß das Gewinde (8) ein Sägezahnprofil aufweist.

5. Befestigungselement nach einem der Ansprüche 1 bis 4, dadurch gekennzeichnet, daß ein rechtsoder linksgängiges Gewinde (8) ausgebildet ist.

6. Befestigungselement nach einem der Ansprüche 1 bis 5, dadurch gekennzeichnet, daß ein mehrgängiges Gewinde (8) vorgesehen ist.

## Claims

1. A fastening element (1) inserted into a blind hole (13) for securing components to construction members, preferably for securing profile members (2) to cladding panels (3) provided with preformed or predrilled blind holes (13), comprising a circumferentially closed tubular sleeve (4) having an abutment flange (6) and a shank part (7) formed at least along part of its length on the outer wall with projections and recesses, which sleeve has a central through-bore and an expanding mandrel (15) provided with a head (10) and having a pull pin (5), wherein the projections and recesses are formed as a thread (8) in the shank part (7) of the sleeve (4), the external diameter of which thread is equal to or smaller than the diameter of the blind hole (13) into which the sleeve (4) is inserted, characterised in that, starting from its free end, the portion of the shank part (7) provided with a thread (8) extends only over a short region (B) which is smaller than the depth (T) of the blind hole (13) into which the sleeve (4) is inserted.

2. A fastening element according to Claim 1, characterised in that, as the projections (8), the shank part (7) of the sleeve (4) has on its outer wall an optionally trilobular-shaped threaded portion.

3. A fastening element according to Claims 1 and 2, characterised in that two regions (B,C) with a thread (8) are formed on the shank part (7), wherein these threads (8) are associated with the two ends of the shank part (7).

4. A fastening element according to any one of Claims 1 to 3, characterised in that the thread (8) has a sawtooth profile.

5. A fastening element according to any one of Claims 1 to 4, characterised in that a right-hand or left-hand thread (8) is formed.

6. A fastening element according to any one of Claims 1 to 5, characterised in that a multistart thread (8) is provided.

## Revendications

1. Elément de fixation (1) insérable dans un trou borgne (13), pour assurer la fixation d'éléments de construction sur des corps de bâtiment, de préférence pour assurer la fixation de pièces profilées (2) sur des plaques d'habillage (3) dotées de trous borgnes (13) préfabriqués ou prépercés, constitués d'une douille (4) à forme tubulaire fermée en périphérie, présentant une bride de butée (6) et, au moins une partie de sa longueur, sur la paroi extérieure, une partie de tige (7) réalisée avec des bossages et des cavités, avec un trou traversant central et une broche d'expansion (15), dotée d'une tête (10) avec une tige de traction (5), les bossages et les cavités formés sur la partie tige (7) ou la douille (4) étant réalisés sous la forme de filetage (8) dont le diamètre extérieur est égal ou inférieur au diamètre du trou borgne (13) dans lequel la douille (4) est insérée,
caractérisé en ce que
le tronçon partiel, doté d'un filetage (8), de la partie de tige (7) n'est guidé, en partant de son extrémité libre, que sur une courte zone (B), inférieure à la profondeur (T) du trou borgne (13) dans lequel la douille (4) est insérée.

2. Elément de fixation selon la revendication 1,
caractérisé en ce que
la partie tige (7) de la douille (4) présente sur sa paroi extérieure, à titre de bossages (8), un tronçon fileté réalisé le cas échéant à trois lobes.

3. Elément de fixation selon les revendications 1 et 2,
caractérisé en ce que
sur la partie tige (7) sont réalisées deux zones (B, C) dotées d'un filetage (8), ces filetages (8) étant associés aux deux extrémités de la partie tige (7).

4. Elément de fixation selon l'une des revendications 1 à 3,
caractérisé en ce que
le filetage (8) présente un profil en dents de scie.

5. Elément de fixation selon l'une des revendications 1 à 4,
caractérisé en ce qu'
est prévu un filetage (8) à pas à droite ou à pas à gauche.

6. Elément de fixation selon l'une des revendications 1 à 5,
caractérisé en ce qu'
est prévu un filetage (8) à plusieurs filets.
